# EUROPÄISCHE PATENTSCHRIFT

(11) **EP 4 063 017 B1**
(45) Veröffentlichungstag und Bekanntmachung des Hinweises auf die Patenterteilung: **25.06.2025**
(21) Anmeldenummer: 22162875.3
(22) Anmeldetag: 18.03.2022
(51) Int. Cl.: B05B 1/34, B05B 7/14, B05B 7/16, B05B 15/50, C23C 24/04, H01M 4/04, B05B 12/14, H01M 4/62, H01M 4/131, H01M 4/133, H01M 10/0525, H01M 4/525, H01M 4/1391, H01M 4/1393, H01M 4/587

(54) **VERFAHREN ZUR BESCHICHTUNG EINES TRÄGERMATERIALS MIT EINEM AKTIVMATERIAL ZUR HERSTELLUNG EINER ELEKTRODENFOLIE EINER BATTERIEZELLE**
METHOD FOR COATING A SUPPORT MATERIAL WITH AN ACTIVE MATERIAL FOR PRODUCING AN ELECTRODE FOIL OF A BATTERY CELL
PROCÉDÉ DE REVÊTEMENT D'UN MATÉRIAU DE SUPPORT AU MOYEN D'UN MATÉRIAU ACTIF DESTINÉ À LA FABRICATION D'UNE FEUILLE D'ÉLECTRODE POUR UN ÉLÉMENT DE BATTERIE

(30) Priorität: 26.03.2021 DE 102021107621
(43) Veröffentlichungstag der Anmeldung: 28.09.2022
(73) Patentinhaber: PowerCo SE, 38239 Salzgitter (DE)
(72) Erfinder: Jamadar, Kartik, 38442 Wolfsburg (DE); Westphal, Bastian, 38106 Braunschweig (DE); Schopf, Sven, 38116 Braunschweig (DE); Gangurde, Priyanka, 422006 Nashik (IN)
(74) Vertreter: karo IP

(56) Entgegenhaltungen:
- DE-A1- 102018 219 153
- US-A1- 2003 219 542
- US-A1- 2020 176 752
- US-B2- 8 142 569
- US-B2- 8 936 830

## Beschreibung

Die Erfindung betrifft ein Verfahren zur Beschichtung eines Trägermaterials mit einem Aktivmaterial zur Herstellung einer Elektrodenfolie einer Batteriezelle. Das Trägermaterial umfasst insbesondere ein bandförmiges Trägermaterial.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separator-Blättern aufweist. Zumindest ein Teil der Anoden- und Kathodenblätter sind als Stromableiter ausgeführt, zur Ableitung des von der Zelle bereitgestellten Stroms hin zu einem außerhalb der Zelle angeordneten Verbraucher.

Bei der Herstellung einer Lithium-Ionen-Batteriezelle wird ein sogenanntes Trägermaterial, insbesondere ein bandförmiges Trägermaterial, z. B. eine Trägerfolie, beidseitig mit einer Slurry über ein Auftragswerkzeug beschichtet. Die Slurry besteht aus mehreren Komponenten, u.a. einem Aktivmaterial, Leitruß, Binder, Lösungsmitteln und ggf. sonstigen Additiven. Nach der jeweils einseitig durchgeführten Beschichtung wird das beschichtete Trägermaterial jeweils einem Trocknungsprozess zugeführt, um das enthaltene Lösungsmittel zu verdampfen und die restlichen Bestandteile fest mit der Trägerfolie zu verbinden. Die Trägerfolie bildet einen Stromableiter der Batteriezelle.

Die so erzeugte Beschichtung ist porös. Die Porosität wird durch das Kalandrieren reduziert, da hier die Beschichtung verdichtet wird. Die Verdichtung ist erforderlich, um eine spezifische Kapazität (auf das Volumen bezogen) und eine elektrische Leitfähigkeit zu erhöhen.

Das bekannte Verfahren der Beschichtung von Anode und Kathode mit einer Slurry, einer anschließenden Trocknung und abschließendem Kalandrieren und Schneiden hat folgende Probleme:
- es entstehen zusätzliche Kosten und Energiebedarf für das Trocknungslösungsmittel (z. B. NMP - N-Methyl-2-pyrrolidon - für die Kathode und Wasser für die Anode);
- durch das Kalandrieren muss eine Verdichtung erzielt werden, wobei dieser Prozess Faltenbildung hervorruft und einer aufwändige Maschinentechnik bedarf;
- es ist schwierig, Beschichtungen aus verschiedenen Schichten mit voneinander unterschiedlicher Dichte zu erzeugen; dazu muss der Zyklus Beschichten-Kalandrieren-Beschichten- Kalandrieren ggf. häufiger durchgeführt werden, so dass die Herstellzeit verlängert und Betriebskosten erhöht werden;
- es liegt eine geringe Adhäsion der Beschichtung vor, so dass Delamination auftreten kann.

Die Trockenbeschichtung (lösungsmittelfrei) wird von einigen Anbietern als Alternative zur Nassbeschichtung (mit einer Slurry) vorgeschlagen. Die Trockenbeschichtung hat aber folgende Nachteile:
- nach der Trockenbeschichtung ist ein beheiztes Kalanderverfahren erforderlich, um das Bindemittel zu schmelzen und gleichmäßig zu verteilen; damit werden Kosten erhöht
- auch hier sind unterschiedliche Schichten mit unterschiedlicher Dichte schwierig herzustellen;
- die Haftung des Aktivmaterials auf dem Trägermaterial (vor einem Kalandrieren) ist gering.

Damit weisen die bekannten Verfahren folgende Nachteile auf:
- das beschichtete Trägermaterial muss verschiedene Prozesse durchlaufen, wie z.B. Beschichten und Kalandrieren;
- das Trägermaterial muss nach jedem Verfahrensschritt wieder aufgewickelt werden; dadurch entstehen Biegespannungen an der Elektrode und auch Partikel-Verschmutzung;
- die einzelnen Prozesse erhöhen den Platzbedarf, die Kosten und auch den Ausschuss;
- eine schichtweise Beschichtung und die schichtweise Verdichtung im Kalander gestalten sich schwierig;
- das Trocknen und das Recycling des Lösungsmittels sind energieintensive Prozesse und verursachen ebenfalls hohe Kosten;
- das Lösungsmittel NMP ist ein Gefahrstoff und muss vorsichtig gehandhabt werden;
- die Viskosität des Schlickers spielt eine entscheidende Rolle für die Qualität der Beschichtung; die Rheologie ist dabei abhängig von leitfähigem Kohlenstoff, Bindemittel und Lösungsmittel;
- es können Probleme mit dem Einschluss von Luft/Gas in der nassen Beschichtung auftreten, wenn die Entgasung nicht richtig durchgeführt wird;
- die Haftung der Beschichtung auf dem Trägermaterial ist von den Trocknungszonen abhängig; zu schnelles Trocknen kann Risse verursachen und/ oder die Haftung verringern;
- Kalandrieren ist mit Problemen wie Faltenbildung aufgrund ungleichmäßiger Dehnung von beschichteten und unbeschichteten Bereichen verbunden;
- Eine hohe Kompression bei dem Kalandrieren kann in der Anode zu Lithiumplattierung führen;
- eine niedrige Kompression kann in der Kathode kann zu einem Verlust an Leitfähigkeit führen.

Es gibt bekannte Lösungen, um die mit der Nassbeschichtung verbundenen Probleme zu lösen. Das Ersetzen der Nassbeschichtung durch Trockenbeschichtung (lösungsmittelfreie Beschichtung) wird hauptsächlich auf zwei verschiedene Arten durchgeführt:
- Trockenmischungen werden durch elektrostatische Entladung nach dem Aerosolprinzip auf das Substrat gespritzt; dadurch entstehen poröse Schichten der Beschichtung; die Beschichtung wird dann bei hoher Temperatur (ca. 150°C) kalandriert, so dass das Bindemittel erweicht und gleichmäßig dispergiert wird;
- die trockene Mischung wird mit einer Walze/einem Rüttler/einem Sieb auf das Substrat aufgetragen und dann unter Temperatur kalandriert; ein Sprühmechanismus ist damit nicht notwendig, d. h. Beschichtung und Kalandrieren sind in einem Arbeitsgang integriert oder das Kalandrieren kann mit zusätzlichen Walzen nachgeholt werden.

Die vorstehend genannten Lösungen haben noch folgende Probleme:
- starke Mischbeanspruchung beim Trockenmischen kann zur Agglomeration des Leitrußes führen und die Viskosität beeinträchtigen;
- die alleinige Haftung der Beschichtung durch elektrostatische Aerosolentladung ist gering; dies führt zu Delaminationen bei der Nachbeschichtung während des Aufwickelns; zur Verdichtung ist ein Kalanderprozess erforderlich;
- Faltenbildung auf dem Trägermaterial bei Verfahren, bei denen die Beschichtung und Kalandrierung mit einer Walze erfolgt; in diesem Fall müssen Kalanderwalzen beheizt werden, so dass ein hoher Energieverbrauch vorliegt.

Aus der US 2013/273407 A1 ist bekannt, ein Aktivmaterial einer Elektrodenfolie mit einer wärmebeständigen Beschichtung zu versehen. Diese Beschichtung wird in Form einer Trockenbeschichtung über eine Laval-Düse aufgetragen.

Aus der US 8,936,830 B2 ist auf ein Verfahren und eine Vorrichtung zur gleichförmigen, kontinuierlichen Beschichtung eines Trägermaterials gerichtet. Das Beschichtungsmaterial wird über eine Laval-Düse auf das Trägermaterial aufgebracht.

Aus der US 2003/0219542 A1 und der US 2002/0168466 A1 ist jeweils ein Verfahren zur Aufbringung einer Beschichtung über eine Überschalldüse bekannt.

Aus der US 8,142,569 B2 ist eine Vorrichtung zur Herstellung einer Batteriezelle bekannt. Dabei wird eine Metallfolie mit einem Aktivmaterial beschichtet. Die Beschichtung erfolgt über eine Laval-Düse.

Aus der US 2020/ 0 176 752 A1 ist ein Verfahren zur Herstellung einer Festkörperbatterie bekannt.

Aufgabe der vorliegenden Erfindung ist es, die mit Bezug auf den Stand der Technik angeführten Probleme zumindest teilweise zu lösen. Insbesondere soll ein Verfahren vorgeschlagen werden, durch das ein Aktivmaterial auf einem Trägermaterial angeordnet werden kann. Dabei soll eine hohe Effektivität des Herstellungsprozesses bei gleichzeitig geringen Kosten und hoher Produktqualität erreicht werden.

Zur Lösung dieser Aufgaben trägt ein Verfahren mit den Merkmalen gemäß Patentanspruch 1 bei. Vorteilhafte Weiterbildungen sind Gegenstand der abhängigen Patentansprüche.

Es wird ein Verfahren zur Beschichtung eines Trägermaterials mit einem Aktivmaterial zur Herstellung einer Elektrodenfolie einer Batteriezelle vorgeschlagen. Die Beschichtung erfolgt mit einer Laval Düse, wobei die Laval Düse entlang einer Durchströmungsrichtung nacheinander angeordnet zumindest einen konvergierenden ersten Abschnitt, einen zweiten Abschnitt mit einem geringsten Durchströmungsquerschnitt (der Laval Düse bzw. der drei Abschnitte) und einen divergierenden dritten Abschnitt aufweist. Das Verfahren weist zumindest die folgenden Schritte auf:
a) Einleiten eines ersten Gasstroms über den ersten Abschnitt in die Laval Düse;
b) Einleiten eines ersten Partikelstroms, umfassend ein Bindematerial für das Aktivmaterial über den dritten Abschnitt in die Laval Düse;
c) Mischen des ersten Gasstroms und des ersten Partikelstroms und Beschleunigen des Partikelstroms durch den im dritten Abschnitt mit einer Überschallgeschwindigkeit strömenden ersten Gasstrom;
d) Beaufschlagen des Trägermaterials mit dem ersten Partikelstrom zur Ausbildung einer Schicht einer Beschichtung und
das Aktivmaterial als ein zweiter Partikelstrom über den ersten Abschnitt und das Bindematerial als der erste Partikelstrom über den dritten Abschnitt in die Laval Düse eingeleitet wird.

Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte kann variieren. Ebenso ist möglich, dass Verfahrensschritte einander zumindest teilweise zeitlich überlagern. Ganz besonders bevorzugt finden die Schritte a) bis d) zumindest zeitweise zeitlich parallel zueinander statt. Schritte b) bis d) erfolgen insbesondere nach oder gleichzeitig mit Schritt a).

Im Rahmen des Verfahrens wird nur eine Laval Düse verwendet, d. h. die Gasströme und/ oder Partikelströme durchlaufen nur eine Laval Düse (zumindest teilweise). Für unterschiedliche Schichten der Beschichtung können aber jeweils unterschiedlich ausgeführte Laval Düsen eingesetzt werden, so dass die Beschichtung dann insgesamt durch unterschiedliche Laval Düsen hergestellt ist.

Eine Laval Düse ist grundsätzlich bekannt. Diese umfassen regelmäßig einen konvergierenden ersten Abschnitt, einen zweiten Abschnitt mit einem geringsten Durchströmungsquerschnitt und einen divergierenden dritten Abschnitt. Die Laval Düse weist stromaufwärts des ersten Abschnitts einen Eintritt und stromabwärts des dritten Abschnitts einen Austritt auf. Die Laval Düse erstreckt sich zwischen Eintritt und Austritt entlang der Durchströmungsrichtung über eine Gesamtlänge. Die einzelnen Abschnitte erstrecken sich jeweils über eine Länge.

Das Prinzip der Laval Düse beruht auf den unterschiedlichen Eigenschaften von Gasen, die mit Unterschall und Überschallgeschwindigkeit strömen. Die Geschwindigkeit eines Unterschallgasstroms nimmt zu, wenn sich der durchströmbare Querschnitt zunehmend verengt, da der Massendurchfluss konstant ist. Der Gasstrom durch eine Laval-Düse ist insbesondere isentrop (die Gasentropie ist nahezu konstant). Bei einer Unterschallströmung breitet sich der Schall durch das Gas aus. In dem zweiten Abschnitt, in dem die Querschnittsfläche bzw. der Durchströmungsquerschnitt minimal ist, wird die Gasgeschwindigkeit lokal schallschnell (Machzahl = 1,0), ein Zustand, der als Drosselströmung bzw. "choked flow" bezeichnet wird. Wenn die durchströmbare Querschnittsfläche der Laval Düse im dritten Abschnitt wieder zunimmt, beginnt sich das Gas auszudehnen und die Gasströmung steigt auf Überschallgeschwindigkeiten an. An einer Laval Düse wird nur dann eine Drosselströmung erzeugt, wenn der Druck und der Massenstrom durch die Düse ausreichen, um Schallgeschwindigkeiten zu erreichen. Anderenfalls wird keine Überschallströmung erreicht, und die Laval Düse verhält sich wie ein Venturi-Rohr. Bei der Laval Düse muss der Eintrittsdruck in der Düse immer deutlich über dem Umgebungsdruck liegen. Darüber hinaus sollte der Druck des Gases am Austritt des dritten Abschnitts einer Laval Düse nicht zu niedrig sein. In der Praxis darf der Umgebungsdruck nicht höher sein als etwa das 2-fache des Drucks im Überschallgasstrom am Austritt betragen, damit die Überschallströmung die Düse verlassen kann.

Insbesondere wird eine lösungsmittelfreie Beschichtung eines Trägermaterials vorgeschlagen. Die lösungsmittelfreie Beschichtung mit trockenen Partikeln ist eine ideale Alternative zum nassen Slurry-Verfahren, da die Kosten für das Lösungsmittel sowie die Kosten für dessen Entfernung und Rückgewinnung entfallen. Mit dem vorgeschlagenen Verfahren kann Trockenpulver für die Beschichtung verwendet werden. Das heißt, es wird kein Lösungsmittel verwendet. Die Beschichtung wird auf das Trägermaterial gespritzt und nicht durch elektrostatische Entladung (mit Venturi-/Aerosol-Techniken) aufgetragen.

Mit der Laval Düse kann eine Überschallgeschwindigkeit des Gasmediums am Austritt der Laval Düse eingestellt werden. Das heißt, die Partikel werden auf eine sehr hohe Geschwindigkeit beschleunigt und damit das Trägermaterial beaufschlagt. Aufgrund der hohen kinetischen Energie haftet die trockene Mischung ausreichend stark am Trägermaterial. Außerdem weist die Beschichtung unmittelbar nach der Beschichtung bereits eine hohe Dichte auf, so dass ein Kalandrieren zur (weiteren) Verdichtung des Aktivmaterials insbesondere nicht erforderlich ist.

Bei einem Kalandrieren wird das beschichtete Trägermaterial durch eine Walzenanordnung geführt, die ggf. temperiert sind und damit das beschichtete Trägermaterial + erwärmen können. Über die Walzen wird die Beschichtung verdichtet. Es erfolgt üblicherweise eine Erhöhung einer Dichte einer Schicht der Beschichtung von mindestens 20 %.

Insbesondere wird ein Binder bzw. ein Bindematerial nur noch in geringer Menge benötigt, weil die hohe kinetische Energie das Aktivmaterial in der Beschichtung durch Festkörperschweißen miteinander verbindet.

Die Beschichtung kann in mehreren Schichten erfolgen bzw. mehrere nacheinander aufgetragene Schichten aufweisen. Insbesondere wird die jeweils zuletzt aufgebrachte Schicht erhitzt und nach dem bekannten Prinzip des Streifenziehens (Nivellierung) geebnet. Jede Schicht kann eine unterschiedliche Chemie, Dichte und Dicke haben. Damit können gewünschte Eigenschaften in Bezug auf Elektrolytdiffusion, elektrische Leitfähigkeit, Haftung der Beschichtung auf dem Trägermaterial und Festkörperverschweißung der Partikel untereinander, eingestellt werden.

Nach der Beschichtung kann die so hergestellte Elektrodenfolie einem Ziehprozess (skin drawing) unterzogen werden, so dass die endgültige Dicke der Elektrodenfolie eingestellt wird. Beim Ziehen (skin drawing) werden beide Seiten der Beschichtung bzw. des beschichteten Trägermaterials komprimiert, während beim Streifenziehen (strip drawing, Nivellieren/ Glätten) nur eine Seite der Beschichtung bearbeitet wird.

Ein letzter Fertigungsschritt umfasst das Ausklinken, das vor dem Aufwickeln stattfindet. Hier wird der (unbeschichtete) Kollektorbereich bzw. Ableiter mit Hilfe eines Stanzverfahrens in die endgültige Form gebracht.

Insbesondere wird das Trägermaterial vor Schritt d), also vor dem Beschichten, auf das für die Elektrodenfolie vorgesehene Endmaß (Breite) zugeschnitten. Insbesondere kann so über eine Laval Düse eine Breite des Trägermaterials beschichtet werden, ohne das eine Relativbewegung zwischen Trägermaterial und Laval Düse in Richtung der Breite erforderlich ist. Ggf. können aber mehrere Laval Düsen eingesetzt werden, die das Trägermaterial gemeinsam beschichten, also mit entlang der Breite nebeneinander angeordneten Streifen der Beschichtung.

Die wichtigsten Vorteile des vorgeschlagenen Verfahrens sind:
- nach der Beschichtung ist kein Kalandrieren erforderlich, da die für einen Einsatz der Elektrodenfolie geforderte Dichte der Beschichtung durch die hohe Geschwindigkeit der abgeschiedenen Partikel erreicht wird;
- das Bindematerial, wird in dem dritten Abschnitt der Laval Düse zugeführt; das bedeutet, dass insbesondere zumindest ein Teil der Partikel nicht erwärmt wird, sondern nur durch den aus der Laval Düse austretenden Gasstrom beschleunigt wird;
- die Laval Düse erzeugt eine Überschallgeschwindigkeit für die Partikelabscheidung;
- aus Kostengründen kann trockene Luft oder Stickstoff (anstatt Helium) für den Gasstrom verwendet werden.

Vorliegend wird die Laval Düse insbesondere so ausgeführt, dass ein Druck im Gasstrom innerhalb des dritten Abschnitts, bevorzugt am Austritt der Laval Düse, einem Umgebungsdruck entspricht oder etwas niedriger (z. B. bis zu 20 % niedriger) als ein Umgebungsdruck ist.

Wenn der erste Gasstrom in den ersten Abschnitt eintritt, bewegt er sich insbesondere mit Unterschallgeschwindigkeit. Aufgrund des konvergierenden ersten Abschnitts bis hin zum geringsten Durchströmungsquerschnitt, wird der Gasstrom beschleunigt. In dem zweiten Abschnitt, in dem der Durchströmungsquerschnitt minimal ist, wird die Geschwindigkeit des Gasstroms entlang der Durchströmungsrichtung schallschnell. Stromabwärts des geringsten Durchströmungsquerschnitts, also im divergierenden dritten Abschnitt, wird der Durchströmungsquerschnitt zunehmend größer. Das Gas des Gasstroms dehnt sich aus und die Geschwindigkeit des Gasstroms steigt immer mehr in den Überschallbereich.

Der erste Gasstrom umfasst zumindest eines von Stickstoff, Helium, eine Mischung von Stickstoff und Helium, oder Luft. Der erste Gasstrom kann in Bezug auf die genannten Bestandteile eine hohe Reinheit aufweisen. Der erste Gasstrom kann also z. B. die jeweilige Komponente, also Stickstoff, Helium, eine Mischung von Stickstoff und Helium, oder Luft, zu mindestens 95 Vol.-% aufweisen.

Der Gasstrom wird am Eintritt der Laval Düse, also stromaufwärts des ersten Abschnitts, insbesondere mit einem Druck von 2 bis 15 bar, bevorzugt von 3 bis 12 bar, bereitgestellt. Der erste Gasstrom weist dort insbesondere eine Temperatur von höchstens 120 Grad Celsius, bevorzugt von höchstens 105 Grad Celsius, auf. Besonders bevorzugt weist der erste Gasstrom dort eine Temperatur von mindestens 80 Grad Celsius, bevorzugt von mindestens 90 Grad Celsius auf.

Der Gasstrom weist am Austritt der Laval Düse, also stromabwärts des dritten Abschnitts, insbesondere einen Druck von 1 bis 2 bar auf. Der Gasstrom weist dort eine Temperatur zwischen 40 und 80 Grad Celsius, insbesondere zwischen 50 und 70 Grad Celsius auf.

Der erste Gasstrom weist insbesondere einen Volumenstrom von 15 bis 30 Kubikmetern pro Stunde auf.

Am Austritt erreicht der erste Gasstrom insbesondere eine Machzahl von 1 bis 5, bevorzugt von 1 bis 3.

Ein Abstand zwischen dem Trägermaterial und dem Austritt kann zwischen 5 und 40 Millimetern betragen, insbesondere zwischen 10 und 30 Millimetern.

Die Geschwindigkeit der mit dem Gasstrom aus dem Austritt austretenden Partikel beträgt insbesondere (als Mittelwert) zwischen 70 und 90 % der Geschwindigkeit des (z. B. ersten) Gasstroms.

Der aus dem Austritt der Laval Düse austretende Partikelstrom wird auf das Trägermaterial gerichtet, so dass eine Wechselwirkung zwischen dem Partikelstrom und dem Trägermaterial erzeugt wird.

Für eine Abscheidung von Partikeln auf dem Trägermaterial, sollten sich die Partikel mit kritischer Geschwindigkeit bewegen. Die kritische Geschwindigkeit hängt vom Beschichtungspartikel ab. Wenn eine Partikelgeschwindigkeit niedriger ist als die kritische Geschwindigkeit ist, prallt das Partikel von dem Trägermaterial ab. Wenn die Partikelgeschwindigkeit größer als die kritische Geschwindigkeit ist, werden die Partikel in das Substrat eindringen und es zerstören. Die Partikel, deren Geschwindigkeit gleich der kritischen Geschwindigkeit ist, werden auf das Substrat aufgetragen.

Daher ist eine hohe kritische Geschwindigkeit für die Partikel erforderlich. Die Partikel erreichen im vorliegenden Verfahren Überschallgeschwindigkeit, wenn sie durch den ersten Gasstrom beschleunigt werden. Zur Einstellung der kinetischen Energie der Partikel können die Parameter Temperatur und Druck verändert werden. Das Aktivmaterial wird im vorliegenden Verfahren, in Folge der Abscheidung über die Laval Düse, stark komprimiert, so dass eine hohe Dichte erreicht werden kann. Es ist damit insbesondere kein nachfolgendes Verdichten und/ oder Kalandrieren erforderlich.

Bei bekannten Venturi-Rohr Abscheidungen werden die hohen Geschwindigkeiten nicht erreicht. Eine Temperatur des Gasstroms hat dabei keinen Effekt. Die Geschwindigkeit wird nur über den Druck verändert. Die dabei erreichten Dichten des Trägermaterials sind zu gering, so dass ein Kalandrieren weiter erforderlich ist.

Insbesondere wird das Trägermaterial vor dem Beschichten gründlich gereinigt, damit Öl, Fett, Schmutz, Farbe und anderes Fremdmaterial entfernt wird. Insbesondere wird die Oberfläche des Trägermaterials aufgeraut, um die Wechselwirkung zwischen Beschichtung und Trägermaterial zu verbessern und die inhärente Oxidschicht auf der Oberfläche zu reduzieren/entfernen. Es gibt verschiedene Methoden zur Reinigung der Oberfläche, wie z.B. Plasmastrahlreinigung, Ultraschallreinigung oder Strahlen.

Das verwendete Trägermaterial besteht insbesondere aus 10 bis 12 µm dickem Kupfer für die Anode und 12 bis 15 µm dickem Aluminium für die Kathode.

Nach der Reinigung wird das Trägermaterial insbesondere zunächst durch mechanisches Schlitzen, Laser-, Wasserstrahl- oder Ultraschallschneiden in eine kleinere Breite geschnitten. Das Schlitzen erfolgt vor insbesondere vor dem Beschichten, so dass die Abscheidung auf der endgültigen erforderlichen Breite des Trägermaterials erfolgen kann. Wird das Schlitzen bzw. Schneiden des Trägermaterials bzw. des beschichteten Trägermaterials erst nach dem Beschichten durchgeführt, können Schichten mit weniger dichtem Pulver an der Schneide und auch an der Schneidkante haften.

Insbesondere können mit der Laval Düse verschiedene Beschichtungsschichten mit voneinander unterschiedlicher Dichte erzeugt werden.

Insbesondere ist das Material der aufzubringenden Beschichtung pulverförmig und lösungsmittelfrei.

Insbesondere ist das Material des ersten Partikelstroms pulverförmig und lösungsmittelfrei.

Insbesondere umfasst es zumindest eines von Leitruß (carbon black), NMC (Lithium-Nickel-Cobalt-Mangan als Lithium-speicherndes Aktivmaterial), Graphit (als Lithium-speicherndes Aktivmaterial), CNT (carbon nano tubes), SBR (Styrene-Butadien Rubber als Binder), CMC (Carboxymethyl Zellulose Polymer), PVDF (Polyvinylidenfluorid) und poröses Graphit. Die Komponenten des Materials, die nicht Bindematerial sind, werden im Folgenden dem Aktivmaterial zugerechnet.

Das Material der aufzubringenden Beschichtung umfasst z. B. für eine Kathode 2 % Leitruß, 0,5 % CNT, 2 % poröses Graphit, PVDF und NMC.

Das Material der aufzubringenden Beschichtung umfasst z. B. für eine Anode 2 % Leitruß, 0,5 % CNT, 2 % poröses Graphit, 3 bis 4 % SBR, 1 bis 2 % CMC, Rest (nicht poröses) Graphit.

Die Partikelgröße, insbesondere der Median der Partikel des mindestens einen Partikelstroms, beträgt insbesondere zwischen 5 und 100 µm im Durchmesser.

Mit der Zufuhr des ersten Partikelstroms in den dritten Abschnitt kann z. B. eine höhere Temperatur für den ersten Gasstrom eingestellt werden, so dass damit die Geschwindigkeit des Gasstroms einstellbar ist. Ein zumindest teilweises Aufschmelzen der Partikel des ersten Partikelstroms, z. B. des Bindematerials, oder eine unerwünschte Agglomeration von Partikeln des ersten Partikelstroms, z. B. von Leitruß, kann so verhindert werden.

Eine Agglomeration der Partikel ist z. B. nachteilig für die Fließfähigkeit des Partikelstroms und kann z. B. die erreichbare Dichte der Beschichtung beeinflussen.

Weiter kann so ein Verstopfen der Laval Düse im zweiten Abschnitt verhindert werden, da zumindest ein Teil des Materials der aufzubringenden Beschichtung stromabwärts des zweiten Abschnitts zugeführt wird.

Weiter liegen in dem dritten Abschnitt laminare Strömungsbedingungen vor, gegenüber den eher turbulenten Strömungsbedingungen im zweiten Abschnitt. Damit wird weniger Reibung im für die Beschichtung vorgesehenen Material verursacht und das Material kann auf höhere Geschwindigkeiten beschleunigt werden.

Insbesondere wird der erste Partikelstrom vor der Einleitung in den dritten Abschnitt mit einem zweiten Gasstrom gemischt. Insbesondere wird der zweite Gasstrom aus dem ersten Gasstrom abgezweigt. Es kann aber auch ein separater Gasstrom erzeugt werden. Durch den zweiten Gasstrom kann der erste Partikelstrom besser in den dritten Abschnitt eingebracht und dort verteilt werden.

Die Ausführungen zu dem ersten Gasstrom sind insbesondere auf den zweiten (bzw. dritten) Gasstrom übertragbar und umgekehrt.

Insbesondere wird der erste Partikelstrom über eine Mehrzahl von Eintrittsöffnungen in den dritten Abschnitt eingeleitet. Insbesondere sind mindestens zwei, bevorzugt mindestens drei, besonders bevorzugt mindestens vier Eintrittsöffnungen vorgesehen.

Insbesondere sind zumindest zwei Eintrittsöffnungen in voneinander unterschiedlichen Abständen von dem geringsten Durchströmungsquerschnitt angeordnet. Insbesondere beträgt der Unterschied der Abstände mindestens 3 bis 15 Millimeter, bevorzugt 3 bis 8 Millimeter. Insbesondere sind zumindest zwei Eintrittsöffnungen entlang einer quer zur Durchströmungsrichtung verlaufenden Umfangsrichtung zueinander versetzt angeordnet. Insbesondere sind die Eintrittsöffnungen entlang der Umfangsrichtung gleichmäßig verteilt angeordnet.

Über die Mehrzahl von Eintrittsöffnungen und deren ggf. besondere Anordnung kann eine Erzeugung von Turbulenzen verhindert werden.

Erfindungsgemäß wird das Aktivmaterial (insbesondere ohne Bindematerial) als ein zweiter Partikelstrom über den ersten Abschnitt und das Bindematerial (mit oder ohne Aktivmaterial) als der erste Partikelstrom über den dritten Abschnitt in die Laval Düse eingeleitet. Jeder Partikelstrom kann insbesondere vor der Einleitung in den jeweiligen Abschnitt mit einem zweiten (bzw. dritten) Gasstrom gemischt werden.

Mit der Zuführung des Bindematerials über den dritten Abschnitt kann ein Aufschmelzen der Binder-Partikel verhindert werden.

Mit der Zuführung des Aktivmaterials über den ersten Abschnitt kann über die dort eingestellte Temperatur des ersten Gasstroms das Aktivmaterial erwärmt und damit die Partikel des zweiten Partikelstroms erweicht werden. Dabei wird eine Schmelztemperatur des Aktivmaterials jedoch nicht überschritten.

Insbesondere wird ein dritter Gasstrom über den dritten Abschnitt in die Laval Düse eingeleitet. Insbesondere wird der dritte Gasstrom über eine eigene Eintrittsöffnung in den dritten Abschnitt eingeleitet. Insbesondere wird der dritte Gasstrom alleine (also ohne einen über dieselbe Eintrittsöffnung zugeführten Partikelstrom) dem dritten Abschnitt zugeführt.

Insbesondere dient der dritte Gasstrom der zusätzlichen Vermischung des dem dritten Abschnitts zugeführten Bindematerials mit dem über den ersten Abschnitt zugeführten zweiten Partikelstrom. Der dritte Gasstrom soll insbesondere zusätzliche Turbulenzen in dem dritten Abschnitt erzeugen und damit die bessere Mischung der Partikelströme bewirken. Insbesondere kann die Zufuhr eines Partikelstroms und/oder eines Gasstroms in die Laval Düse über jeweils ein regelbares Ventil gesteuert werden.

Insbesondere werden die Schritte a) bis d) für das Trägermaterial mehrmals nacheinander durchgeführt, so dass das Aktivmaterial in einer Mehrzahl von Schichten aufgetragen wird. Insbesondere erfolgt zwischen den einzelnen Durchläufen der Schritte a) bis d), also insbesondere nach jeder aufgetragenen Schicht der Beschichtung eine thermische Behandlung, eine Kühlung oder Erwärmung, des beschichteten Trägermaterials und/ oder ein Streifenziehen (strip drawing) der Oberfläche der Beschichtung.

Insbesondere erfolgt unmittelbar nach der (jeder) Beschichtung des Trägermaterials zunächst ein Abkühlprozess, durch den die Beschichtung abgekühlt wird.

Insbesondere erfolgt unmittelbar vor einem Ziehen bzw. Streifenziehen eine Erwärmung des beschichteten Trägermaterials, insbesondere auf eine Temperatur zwischen 100 und 140 Grad Celsius, bevorzugt zwischen 110 und 130 Grad Celsius.

Insbesondere weist eine erste (zuerst aufgetragene) Schicht der Beschichtung eine erste Dicke und eine nachfolgend zur ersten Schicht aufgetragene zweite Schicht eine zweite Dicke auf, wobei die zweite Dicke größer ist als die erste Dicke. Insbesondere beträgt z. B. die erste Dicke zwischen 5 und 20 µm und die zweite Dicke zwischen 20 und 40 µm. Weitere Schichten können jeweils Dicken zwischen 20 und 60 µm aufweisen. Insbesondere ist auch eine dritte Schicht dicker als die zweite Schicht.

Insbesondere weist eine erste (zuerst aufgetragene) Schicht der Beschichtung eine erste Dichte und eine nachfolgend zur ersten Schicht aufgetragene zweite Schicht eine zweite Dichte auf, wobei die zweite Dichte geringer ist als die erste Dichte. Weitere Schichten können jeweils andere Dichten aufweisen. Insbesondere weist auch eine dritte Schicht eine geringere Dichte als die zweite Schicht auf. Die Dichte jeder Schicht kann insbesondere durch eine Regelung des Drucks des mindestens einen Gasstroms (insbesondere des ersten Gasstroms) eingestellt werden.

Insbesondere kann jede Schicht zumindest eine eigene, ggf. unterschiedliche, Konfiguration hinsichtlich zumindest eines der folgenden Parameter: Dichte, Dicke, Zusammensetzung, aufweisen.

Insbesondere wird eine Dichte der mindestens einen Schicht der Beschichtung nach Schritt d) um höchstens 10 %, bevorzugt um höchstens 5 %, besonders bevorzugt um höchstens 2 % weiter erhöht.

Eine Laval Düse weist insbesondere einen in Durchströmungsrichtung vorgelagerten konvergierenden ersten Abschnitt und einen nachgelagerten divergierenden dritten Abschnitt auf. Die Eigenschaften einer Laval Düse werden durch die Kontur und die Länge des divergierenden dritten Abschnitts und zusätzlich durch das Verhältnis des Austrittsquerschnitts zum kleinsten Durchströmungsquerschnitt (Aufweitungsverhältnis) bestimmt. Der kleinste Durchströmungsquerschnitt ist im zweiten Abschnitt angeordnet bzw. bildet den zweiten Abschnitt. Die hier verwendeten Laval Düsen können im dritten Abschnitt kegelförmig (konstanter Winkel der Aufweitung) oder glockenförmig (entlang der Länge des dritten Abschnitts zunehmend geringerer Winkel der Aufweitung) ausgeführt sein.

Die glockenförmige Kontur des dritten Abschnitts ermöglicht insbesondere ein besseres Applikationsverhalten der aufzutragenden Partikel. Es ist daher insbesondere vorteilhaft, wenn der gesamte dritte Abschnitt glockenförmig gestaltet ist. Es kann aber auch nur ein Teil des dritten Abschnitts glockenförmig und der Rest des dritten Abschnitts anders, z. B. als Kegel oder als Zylinder, ausgebildet sein. Der Anfang des dritten Abschnitts, also der Anschluss an den zweiten Abschnitt, sollte vorzugsweise glockenförmig sein. Die Glockenform sollte sich entlang der Durchströmungsrichtung mindestens über 30 % oder mindestens 50 % der Länge des dritten Abschnitts erstrecken. Danach kann der Rest des dritten Abschnitts in eine andere Form übergehen. Ein abrupter Übergang von der Glockenform zu einem Kegel oder zu einem Zylinder sollte insbesondere vermieden werden. Abrupte Übergänge können die Gleichmäßigkeit (laminare Strömung) des Gasstroms bzw. Partikelstroms stören.

Die Länge des dritten Abschnitts erstreckt sich insbesondere entlang der Durchströmungsrichtung zwischen dem geringsten Durchströmungsquerschnitt bzw. dem Anfang des divergierenden Abschnitts und dem Austritt der Laval Düse.

Die glockenförmige divergierende Form des dritten Abschnitts erzeugt eine besonders ausgeprägte laminare Strömung des Gasstroms bzw. Partikelstroms. Dadurch kann die höchste Geschwindigkeit für die Partikel im Partikelstrom erreicht werden, da die Reibung auf ein Minimum reduziert wird.

Vorteilhafte Beschichtungsergebnisse können mit Laval Düsen erzielt werden, deren Aufweitungsverhältnis (Durchmesser des Austritts/ Durchmesser des geringsten Durchströmungsquerschnitts) zwischen 1 und 25 liegt. Es ist insbesondere vorteilhaft, wenn die Machzahl des Gasstroms und/oder der Partikel am Austritt zwischen 1 und 5 liegt, abhängig von der Partikelgröße. Kleinere Partikel benötigen eine Geschwindigkeit mit einer höheren Mach-Zahl für eine Beschichtung mit hoher Dichte.

Insbesondere kann der dritte Abschnitt der Laval-Düse eine der folgenden Formen aufweisen:
- konische (kegelige) Form;
- konische (kegelige) Form, die in Durchströmungsrichtung in eine zylindrische Form übergeht; wobei der Übergang nach 30 % bzw. nach 50 % der Länge des dritten Abschnitts erfolgt;
- glockenförmig;
- glockenförmig, wobei die glockenförmige Form in Durchströmungsrichtung in eine quadratische bzw. pyramidische Form übergeht; wobei der Übergang nach 30 % bzw. nach 50 % der Länge des dritten Abschnitts erfolgt.

Insbesondere beträgt ein Durchmesser des Eintritts der Laval Düse zwischen 5 und 30 Millimeter, insbesondere von 10 bis 20 Millimeter. Insbesondere beträgt ein Durchmesser des Austritts der Laval Düse zwischen 15 und 60 Millimeter, insbesondere von 20 bis 50 Millimeter. Insbesondere beträgt ein Durchmesser des geringsten Durchströmungsquerschnitts zwischen 2 und 5 Millimeter. Insbesondere beträgt eine Länge des ersten Abschnitts entlang der Durchströmungsrichtung zwischen 10 und 25 Millimeter, insbesondere zwischen 10 und 20 Millimeter. Insbesondere beträgt eine Länge des dritten Abschnitts entlang der Durchströmungsrichtung zwischen 25 und 40 Millimeter, insbesondere zwischen 30 und 35 Millimeter.

Die Form der Laval Düse kann insbesondere in Bezug auf die zu erreichende Dichte oder die Gleichmäßigkeit der Dicke ausgewählt werden. Bevorzugt wird eine zunächst glockenförmige und dann in eine quadratische Form übergehende Form des dritten Abschnitts eingesetzt, da damit eine gleichmäßige Dicke der Beschichtung erreicht werden kann.

Es wird weiter eine Batteriezelle vorgeschlagen, zumindest umfassend ein Gehäuse und darin angeordnet mindestens eine Elektrodenfolie, die durch das beschriebene Verfahren zumindest mit einem Aktivmaterial beschichtet ist.

Die Batteriezelle umfasst insbesondere ein, ein Volumen umschließendes Gehäuse und in dem Volumen angeordnet mindestens eine erste Elektrodenfolie einer ersten Elektrodenart, eine zweite Elektrodenfolie einer zweiten Elektrodenart und ein dazwischen angeordnetes Separatormaterial sowie einen flüssigen Elektrolyt.

Die Batteriezelle ist insbesondere eine Pouchzelle (mit einem verformbaren Gehäuse bestehend aus einer Pouchfolie) oder eine prismatische Zelle (mit einem formfesten Gehäuse). Eine Pouchfolie ist ein bekanntes verformbares Gehäuseteil, dass als Gehäuse für sogenannte Pouchzellen eingesetzt wird. Es handelt sich dabei um ein Kompositmaterial, z. B. umfassend einen Kunststoff und Aluminium.

Die Batteriezelle ist insbesondere eine Lithium-Ionen-Batteriezelle.

Die einzelnen Folien der Mehrzahl von Elektrodenfolien sind aufeinander angeordnet und bilden insbesondere einen Stapel. Die Elektrodenfolien sind jeweils unterschiedlichen Elektrodenarten zugeordnet, sind also als eine Anode oder eine Kathode ausgeführt. Dabei sind Anoden und Kathoden wechselweise und jeweils durch das Separatormaterial getrennt voneinander angeordnet.

Eine Batteriezelle ist ein Stromspeicher, der z. B. in einem Kraftfahrzeug zum Speichern von elektrischer Energie eingesetzt wird. Insbesondere weist z. B. ein Kraftfahrzeug eine elektrische Maschine zum Antrieb des Kraftfahrzeuges (einen Traktionsantrieb) auf, wobei die elektrische Maschine durch die in der Batteriezelle gespeicherte elektrische Energie antreibbar ist.

Es wird weiter ein Kraftfahrzeug vorgeschlagen, zumindest umfassend einen Traktionsantrieb und eine Batterie mit mindestens einer der beschriebenen Batteriezellen, wobei der Traktionsantrieb durch die mindestens eine Batteriezelle mit Energie versorgbar ist.

Das Verfahren ist insbesondere durch ein Steuergerät, das zur Durchführung des beschriebenen Verfahrens ausgestattet, konfiguriert oder programmiert ist, durchführbar. Mit dem Steuergerät kann zumindest
- ein Vorschub des Trägermaterials gegenüber der mindestens einen Laval Düse;
- eine Regelung des mindestens einen Gasstroms;
- eine Regelung des mindestens einen Partikelstroms;
- eine Regelung der genannten Parameter, z. B. Druck, Temperatur, Volumenstrom erfolgen.

Es wird insbesondere eine Beschichtungseinrichtung vorgeschlagen, die insbesondere geeignet ausgeführt ist, dass das vorstehend beschriebene Verfahren damit ausgeführt werden kann.

Die Beschichtungseinrichtung umfasst insbesondere das vorstehend beschrieben Steuergerät.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte des vorgeschlagenen Verfahrens auszuführen.

Die Ausführungen zu dem Verfahren sind insbesondere auf die Batteriezelle, das Kraftfahrzeug, die Beschichtungseinrichtung, das Steuergerät sowie auf das computerimplementierte Verfahren (also den Computer bzw. den Prozessor, das System zur Datenverarbeitung, das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert.

Es zeigen:
- Fig. 1:: eine Beschichtungseinrichtung zum Durchführen eines nicht erfindungsgemäßen Verfahrens gemäß einer ersten Ausführungsvariante;
- Fig. 2:: einen Teil einer Beschichtungseinrichtung zum Durchführen eines nicht erfindungsgemäßen Verfahrens gemäß einer zweiten Ausführungsvariante;
- Fig. 3:: eine Beschichtungseinrichtung zum Durchführen des erfindungsgemäßen Verfahrens gemäß einer dritten Ausführungsvariante;
- Fig. 4:: eine Beschichtungseinrichtung zum Durchführen des Verfahrens gemäß einer vierten Ausführungsvariante;
- Fig. 5:: eine erste Ausführungsvariante einer Laval Düse in perspektivischer Ansicht;
- Fig. 6:: eine zweite Ausführungsvariante einer Laval Düse in perspektivischer Ansicht;
- Fig. 7:: eine dritte Ausführungsvariante einer Laval Düse in perspektivischer Ansicht;
- Fig. 8:: eine vierte Ausführungsvariante einer Laval Düse in perspektivischer Ansicht; und
- Fig. 9:: eine Batteriezelle.

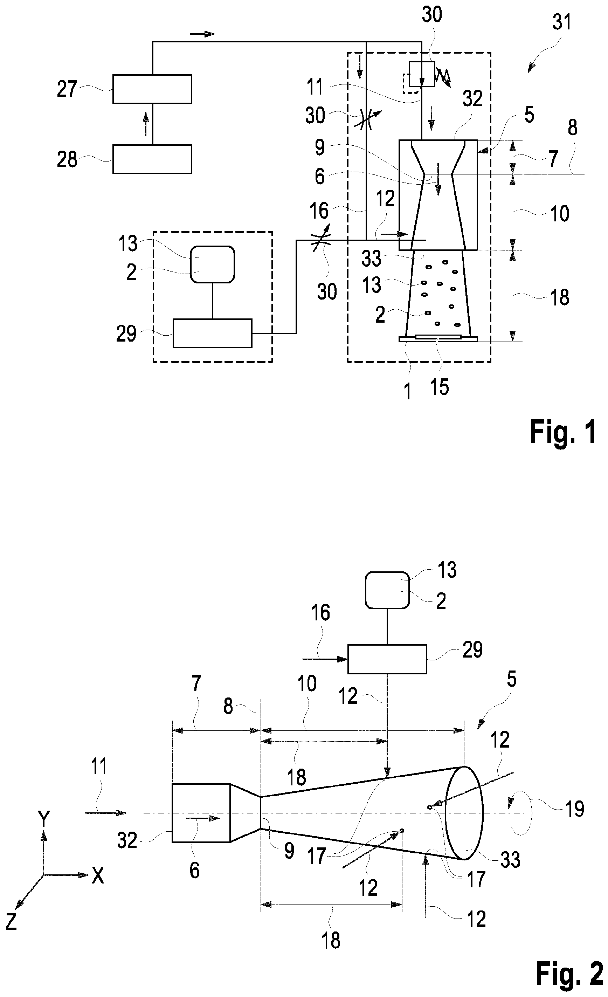

Die Fig. 1 zeigt eine Beschichtungseinrichtung 31 zum Durchführen des Verfahrens gemäß einer ersten Ausführungsvariante. Die Beschichtungseinrichtung 31 umfasst eine Laval Düse 5, die entlang einer Durchströmungsrichtung 6 nacheinander angeordnet einen konvergierenden ersten Abschnitt 7, einen zweiten Abschnitt 8 mit einem geringsten Durchströmungsquerschnitt 9 und einen divergierenden dritten Abschnitt 10 aufweist. Die Laval Düse 5 weist stromaufwärts des ersten Abschnitts 7 einen Eintritt 32 und stromabwärts des dritten Abschnitts 10 einen Austritt 33 auf. Die Laval Düse 5 erstreckt sich zwischen Eintritt 32 und Austritt 33 entlang der Durchströmungsrichtung 6 über eine Gesamtlänge. Die einzelnen Abschnitte 7, 8, 10 erstrecken sich jeweils über eine Länge 25.

Gemäß Schritt a) des Verfahrens erfolgt ein Einleiten eines ersten Gasstroms 11 über den Eintritt 32 in den ersten Abschnitt 7 der Laval Düse 5. Der erste Gasstrom 11 wird über ein Ventil 30 geregelt. Der erste Gasstrom 11 ist über einen Verdichter 27 auf einen vorbestimmten Druck verdichtet und über eine Heizvorrichtung 28 auf eine vorbestimmte Temperatur erwärmt worden.

Gemäß Schritt b) erfolgt ein Einleiten eines ersten Partikelstrom 12, zumindest umfassend das Aktivmaterial 2 und ein Bindematerial 13 für das Aktivmaterial 2 über den dritten Abschnitt 10 in die Laval Düse 5. Das Aktivmaterial 2 und das Bindematerial 13 werden in einer Mischeinrichtung 29 miteinander vermischt und als gemeinsamer erster Partikelstrom 12 über eine Eintrittsöffnung 17 in den dritten Abschnitt 10 eingeleitet.

Mit der Zufuhr des ersten Partikelstroms 12 in den dritten Abschnitt 10 kann eine höhere Temperatur für den ersten Gasstrom 11 eingestellt werden, so dass damit die Geschwindigkeit des Gasstroms 11 einstellbar ist. Ein zumindest teilweises Aufschmelzen der Partikel des ersten Partikelstroms 12, z. B. des Bindematerials 13, oder eine unerwünschte Agglomeration von Partikeln des Aktivmaterials 2, z. B. von Leitruß, kann so verhindert werden.

Weiter kann so ein Verstopfen der Laval Düse 5 im zweiten Abschnitt 8 verhindert werden, da das Material der aufzubringenden Beschichtung 15 stromabwärts des zweiten Abschnitts 8 zugeführt wird.

Weiter liegen in dem dritten Abschnitt 10 laminare Strömungsbedingungen vor, gegenüber den eher turbulenten Strömungsbedingungen im zweiten Abschnitt 8. Damit wird weniger Reibung im für die Beschichtung 15 vorgesehenen Material verursacht und das Material kann auf höhere Geschwindigkeiten beschleunigt werden.

Der erste Partikelstrom 12 wird vor der Einleitung in den dritten Abschnitt 10 mit einem zweiten Gasstrom 16 gemischt. Der zweite Gasstrom 16 wird aus dem ersten Gasstrom 11 abgezweigt. Durch den zweiten Gasstrom 16 kann der erste Partikelstrom 12 besser in den dritten Abschnitt 10 eingebracht und dort verteilt werden.

Gemäß Schritt c) erfolgt ein Mischen des ersten Gasstroms 11 und des ersten Partikelstroms 12 im dritten Abschnitt 10 und ein Beschleunigen des ersten Partikelstroms 12 durch den im dritten Abschnitt 10 mit einer Überschallgeschwindigkeit strömenden ersten Gasstrom 11. Gemäß Schritt d) erfolgt ein Beaufschlagen des Trägermaterials 1 mit dem ersten Partikelstrom 12 zur Ausbildung einer Schicht 14, 23 einer Beschichtung 15. Ein Abstand 18 zwischen dem Trägermaterial 1 und dem Austritt 33 kann zwischen 5 und 40 Millimetern betragen.

Fig. 2 zeigt einen Teil einer Beschichtungseinrichtung 31 zum Durchführen des Verfahrens gemäß einer zweiten Ausführungsvariante. Auf die Ausführungen zur ersten Ausführungsvariante wird verwiesen.

Im Unterschied zur ersten Ausführungsvariante wird der erste Partikelstrom 11 über eine Mehrzahl von Eintrittsöffnungen 17 in den dritten Abschnitt 10 eingeleitet. Es sind vier Eintrittsöffnungen 17 vorgesehen.

Die Eintrittsöffnungen 17 sind in voneinander unterschiedlichen Abständen 18 von dem geringsten Durchströmungsquerschnitt 9 angeordnet.

Zudem sind die Eintrittsöffnungen 17 entlang einer quer zur Durchströmungsrichtung 6 verlaufenden Umfangsrichtung 19 zueinander versetzt angeordnet. Die Eintrittsöffnungen 17 sind entlang der Umfangsrichtung 19 gleichmäßig verteilt, vorliegend um jeweils 90 Winkelgrad zueinander versetzt, angeordnet.

Über die Mehrzahl von Eintrittsöffnungen 17 und deren besondere Anordnung kann eine Erzeugung von Turbulenzen im dritten Abschnitt 10 verhindert werden.

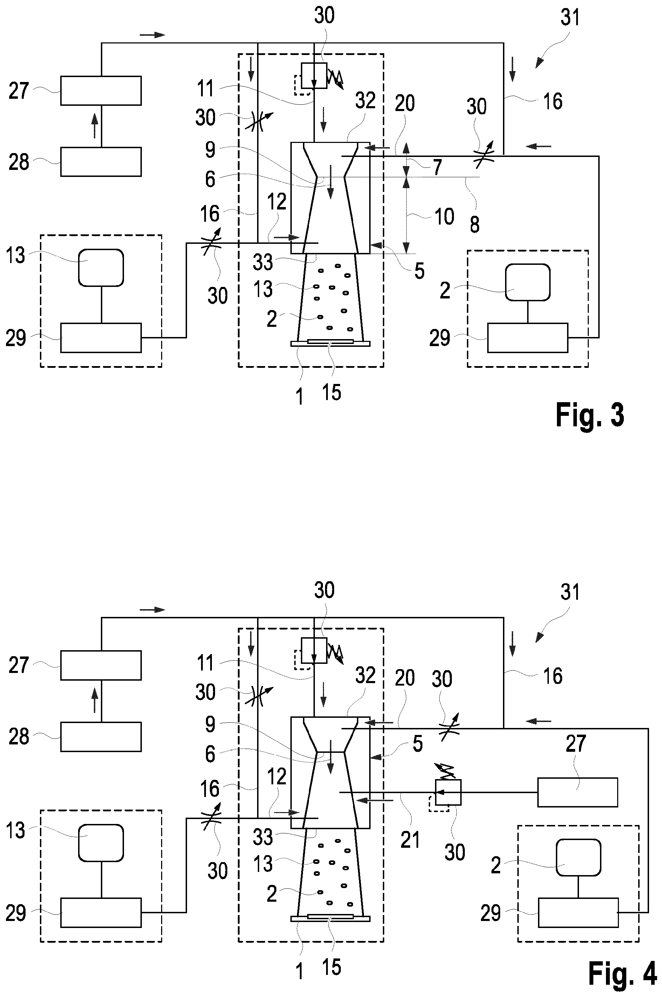

Fig. 3 zeigt eine Beschichtungseinrichtung 31 zum Durchführen des erfindungsgemäßen Verfahrens gemäß einer dritten Ausführungsvariante. Auf die Ausführungen zur ersten Ausführungsvariante wird verwiesen.

Im Unterschied zur ersten Ausführungsvariante wird das Aktivmaterial 2 (ohne Bindematerial 13) als ein zweiter Partikelstrom 20 über den ersten Abschnitt 7 und das Bindematerial 13 als der erste Partikelstrom 12 über den dritten Abschnitt 10 in die Laval Düse 5 eingeleitet. Jeder Partikelstrom 12, 20 wird vor der Einleitung in den jeweiligen Abschnitt 7, 10 mit einem zweiten Gasstrom 16 gemischt. Es sind jeweils eigene Mischeinrichtungen 29 für das Aktivmaterial 2 und für das Bindematerial 13 vorgesehen.

Mit der Zuführung des Bindematerials 13 über den dritten Abschnitt 10 kann ein Aufschmelzen der Binder-Partikel verhindert werden.

Mit der Zuführung des Aktivmaterials 2 über den ersten Abschnitt 7 kann über die dort eingestellte Temperatur des ersten Gasstroms 11 das Aktivmaterial 2 erwärmt und damit die Partikel des zweiten Partikelstroms 20 erweicht werden. Dabei wird eine Schmelztemperatur des Aktivmaterials 2 jedoch nicht überschritten.

Die Zuführung der Gasströme 11, 16 und Partikelströme 12, 20 wird jeweils über Ventile 30 geregelt.

Fig. 4 zeigt eine Beschichtungseinrichtung 31 zum Durchführen des Verfahrens gemäß einer vierten Ausführungsvariante. Auf die Ausführungen zur dritten Ausführungsvariante wird verwiesen.

Im Unterschied zur dritten Ausführungsvariante wird ein dritter Gasstrom 21 über den dritten Abschnitt 10 in die Laval Düse 5 eingeleitet. Der dritte Gasstrom 21 wird über eine eigene Eintrittsöffnung 17 in den dritten Abschnitt 10 eingeleitet. Der dritte Gasstrom 21 wird alleine (also ohne einen über dieselbe Eintrittsöffnung 17 zugeführten Partikelstrom 12, 20) dem dritten Abschnitt 10 zugeführt.

Der dritte Gasstrom 21 dient der zusätzlichen Vermischung des dem dritten Abschnitt 10 zugeführten Bindematerials 13 mit dem über den ersten Abschnitt 7 zugeführten zweiten Partikelstrom 20. Der dritte Gasstrom 21 soll insbesondere zusätzliche Turbulenzen in dem dritten Abschnitt 10 erzeugen und damit die bessere Mischung der Partikelströme 12, 20 bewirken.

Die Zufuhr jedes Partikelstroms 12, 20 und jedes Gasstroms 11, 16, 21 in die Laval Düse 5 wird über jeweils ein regelbares Ventil 30 gesteuert.

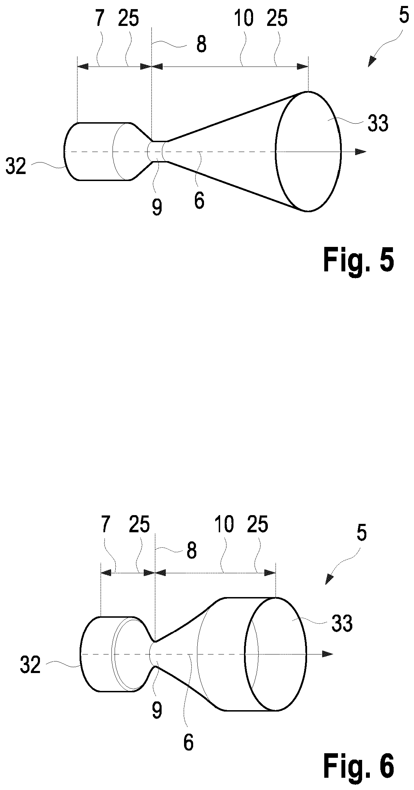

Fig. 5 zeigt eine erste Ausführungsvariante einer Laval Düse 5 in perspektivischer Ansicht. Die Laval Düse 5 weist entlang einer Durchströmungsrichtung 6 nacheinander angeordnet einen konvergierenden ersten Abschnitt 7, einen zweiten Abschnitt 8 mit einem geringsten Durchströmungsquerschnitt 9 und einen divergierenden dritten Abschnitt 10 auf. Die Laval Düse 5 weist stromaufwärts des ersten Abschnitts 7 einen Eintritt 32 und stromabwärts des dritten Abschnitts 10 einen Austritt 33 auf. Die Laval Düse 5 erstreckt sich zwischen Eintritt 32 und Austritt 33 entlang der Durchströmungsrichtung 6 über eine Gesamtlänge. Die einzelnen Abschnitte 7, 8, 10 erstrecken sich jeweils über eine Länge 25.

Die Eigenschaften einer Laval Düse 5 werden durch die Kontur und die Länge 25 des divergierenden dritten Abschnitts 10 und zusätzlich durch das Verhältnis des Austrittsquerschnitts zum kleinsten Durchströmungsquerschnitt 9 (Aufweitungsverhältnis) bestimmt. Der kleinste Durchströmungsquerschnitt 9 ist im zweiten Abschnitt 8 angeordnet bzw. bildet den zweiten Abschnitt 8.

Die vorliegende Laval Düse 5 ist im dritten Abschnitt 10 kegelförmig (konstanter Winkel der Aufweitung) ausgeführt.

Fig. 6 zeigt eine zweite Ausführungsvariante einer Laval Düse 5 in perspektivischer Ansicht. Auf die Ausführungen zu Fig. 5 wird verwiesen.

Im Unterschied zur ersten Ausführungsvariante weist diese Laval Düse 5 eine konische (kegelige) Form auf, die in Durchströmungsrichtung 6 in eine zylindrische Form übergeht; wobei der Übergang nach ca. 50 % der Länge 25 des dritten Abschnitts 10 erfolgt.

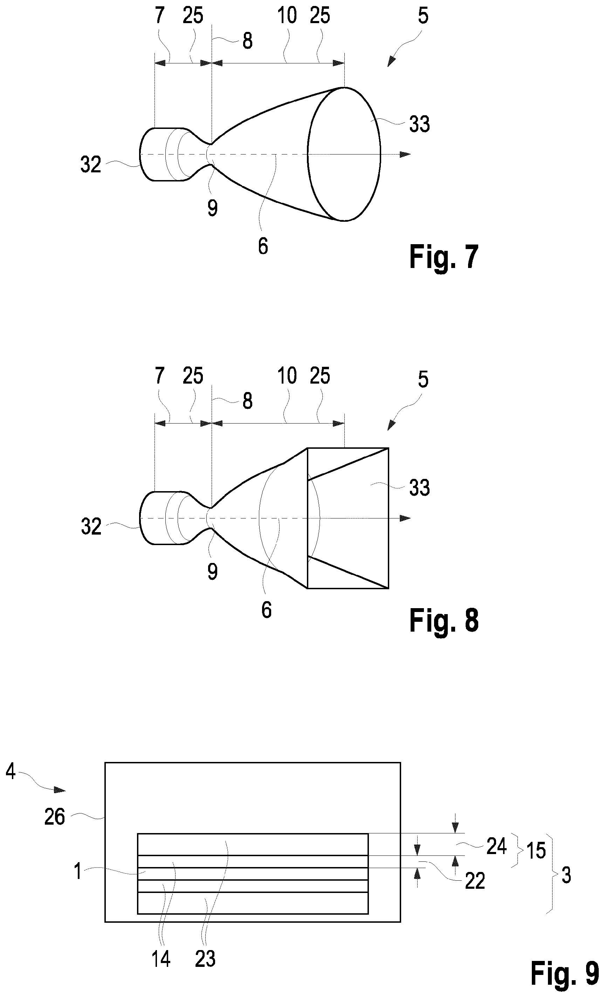

Fig. 7 zeigt eine dritte Ausführungsvariante einer Laval Düse 5 in perspektivischer Ansicht. Auf die Ausführungen zu Fig. 5 wird verwiesen.

Im Unterschied zur ersten Ausführungsvariante weist diese Laval Düse 5 eine glockenförmige Kontur des dritten Abschnitts 10 auf.

Fig. 8 zeigt eine vierte Ausführungsvariante einer Laval Düse 5 in perspektivischer Ansicht. Auf die Ausführungen zu Fig.7 wird verwiesen.

Im Unterschied zur dritten Ausführungsvariante ist bei dieser Laval Düse 5 nur ein Teil des dritten Abschnitts 10 glockenförmig und der Rest des dritten Abschnitts 10 pyramidisch ausgebildet bzw. geht der glockenförmige Teil sukzessive zu einem quadratischen Querschnitt am Austritt 33 über.

Die glockenförmige divergierende Form des dritten Abschnitts 10 erzeugt eine besonders ausgeprägte laminare Strömung des Gasstroms 11, 16, 21 bzw. Partikelstroms 12, 20. Dadurch kann die höchste Geschwindigkeit für die Partikel im Partikelstrom 12, 20 erreicht werden, da die Reibung auf ein Minimum reduziert wird.

Fig. 9 zeigt eine Batteriezelle 4, zumindest umfassend ein Gehäuse 26 und darin angeordnet mindestens eine Elektrodenfolie 3, die durch das beschriebene Verfahren zumindest mit einem Aktivmaterial 2 beschichtet ist. Die Elektrodenfolie 3 umfasst ein Trägermaterial 1 mit einer beidseitigen Beschichtung 15.

Eine erste (zuerst aufgetragene) Schicht 14 der Beschichtung 15 weist eine erste Dicke 22 und eine nachfolgend zur ersten Schicht 14 und auf diese erste Schicht 14 aufgetragene zweite Schicht 23 eine zweite Dicke 24 auf, wobei die zweite Dicke 24 größer ist als die erste Dicke 22. Diese Ausführungen gelten für jede der auf unterschiedliche Seiten des Trägermaterials 1 aufgetragenen Beschichtungen 15.

### Bezugszeichenliste

- 1: Trägermaterial
- 2: Aktivmaterial
- 3: Elektrodenfolie
- 4: Batteriezelle
- 5: Laval Düse
- 6: Durchströmungsrichtung
- 7: erster Abschnitt
- 8: zweiter Abschnitt
- 9: Durchströmungsquerschnitt
- 10: dritter Abschnitt
- 11: erster Gasstrom
- 12: erster Partikelstrom
- 13: Bindematerial
- 14: erste Schicht
- 15: Beschichtung
- 16: zweiter Gasstrom
- 17: Eintrittsöffnung
- 18: Abstand
- 19: Umfangsrichtung
- 20: zweiter Partikelstrom
- 21: dritter Gasstrom
- 22: erste Dicke
- 23: zweite Schicht
- 24: zweite Dicke
- 25: Länge
- 26: Gehäuse
- 27: Verdichter
- 28: Heizvorrichtung
- 29: Mischeinrichtung
- 30: Ventil
- 31: Beschichtungseinrichtung
- 32: Eintritt
- 33: Austritt

## Patentansprüche

1. Verfahren zur Beschichtung eines Trägermaterials (1) mit einem Aktivmaterial (2) zur Herstellung einer Elektrodenfolie (3) einer Batteriezelle (4) mit einer Laval Düse (5), wobei die Laval Düse (5) entlang einer Durchströmungsrichtung (6) nacheinander angeordnet zumindest einen konvergierenden ersten Abschnitt (7), einen zweiten Abschnitt (8) mit einem geringsten Durchströmungsquerschnitt (9) und einen divergierenden dritten Abschnitt (10) aufweist; wobei das Verfahren zumindest die folgenden Schritte aufweist:
a) Einleiten eines ersten Gasstroms (11) über den ersten Abschnitt (7) in die Laval Düse (5);
b) Einleiten eines ersten Partikelstroms (12), zumindest umfassend ein Bindematerial (13) für das Aktivmaterial (2) über den dritten Abschnitt (10) in die Laval Düse (5);
c) Mischen des ersten Gasstroms (11) und des ersten Partikelstroms (12) und Beschleunigen des ersten Partikelstroms (12) durch den im dritten Abschnitt (10) mit einer Überschallgeschwindigkeit strömenden ersten Gasstrom (11);
d) Beaufschlagen des Trägermaterials (1) mit dem ersten Partikelstrom (12) zur Ausbildung einer Schicht (14, 23) einer Beschichtung (15);
**dadurch gekennzeichnet, dass** das Aktivmaterial (2) als ein zweiter Partikelstrom (20) über den ersten Abschnitt (7) und das Bindematerial (13) als der erste Partikelstrom (12) über den dritten Abschnitt (10) in die Laval Düse (5) eingeleitet wird.

2. Verfahren nach Patentanspruch 1, wobei der erste Gasstrom (11) zumindest eines von Stickstoff, Helium, eine Mischung von Stickstoff und Helium, oder Luft umfasst.

3. Verfahren nach einem der vorhergehenden Patentansprüche, wobei das Material des ersten Partikelstroms (12) pulverförmig und lösungsmittelfrei ist und zumindest eines von Leitruß, NMC, Graphit, CNT, SBR, CMC, PVDF und poröses Graphit umfasst.

4. Verfahren nach einem der vorhergehenden Patentansprüche, wobei der erste Partikelstrom (12) vor der Einleitung in den dritten Abschnitt (10) mit einem zweiten Gasstrom (16) gemischt wird.

5. Verfahren nach einem der vorhergehenden Patentansprüche, wobei der erste Partikelstrom (12) über eine Mehrzahl von Eintrittsöffnungen (17) in den dritten Abschnitt (10) eingeleitet wird.

6. Verfahren nach Patentanspruch 5, wobei zumindest zwei Eintrittsöffnungen (17) in voneinander unterschiedlichen Abständen (18) von dem geringsten Durchströmungsquerschnitt (9) angeordnet sind.

7. Verfahren nach einem der vorhergehenden Patentansprüche 5 und 6, wobei zumindest zwei Eintrittsöffnungen (17) entlang einer quer zur Durchströmungsrichtung (6) verlaufenden Umfangsrichtung (19) zueinander versetzt angeordnet sind.

8. Verfahren nach einem der vorhergehenden Patentansprüche, wobei ein dritter Gasstrom (21) über den dritten Abschnitt (10) in die Laval Düse (5) eingeleitet wird.

9. Verfahren nach einem der vorhergehenden Patentansprüche, wobei die Schritte a) bis d) für das Trägermaterial (1) mehrmals nacheinander durchgeführt werden, so dass das Aktivmaterial (2) in einer Mehrzahl von Schichten (14, 23) aufgetragen wird.

10. Verfahren nach Patentanspruch 9, wobei eine erste Schicht (14) der Beschichtung (15) eine erste Dicke (22) und eine nachfolgend zur ersten Schicht (14) aufgetragene zweite Schicht (23) eine zweite Dicke (24) aufweist, wobei die zweite Dicke (24) größer ist als die erste Dicke (22).

11. Verfahren nach einem der vorhergehenden Patentansprüche 9 und 10, wobei eine erste Schicht (14) der Beschichtung (15) eine erste Dichte und eine nachfolgend zur ersten Schicht (14) aufgetragene zweite Schicht (23) eine zweite Dichte aufweist, wobei die zweite Dichte geringer ist als die erste Dichte.

12. Verfahren nach einem der vorhergehenden Patentansprüche, wobei nach Schritt d) eine Dichte der Schicht (14, 23) um höchstens 10 % erhöht wird.

## Claims

1. Method for coating a support material (1) with an active material (2) for producing an electrode foil (3) of a battery cell (4) with a Laval nozzle (5), wherein the Laval nozzle (5) has, arranged one after the other along a direction of throughflow (6), at least a converging first portion (7), a second portion (8), having a smallest throughflow cross section (9), and a diverging third portion (10); wherein the method has at least the following steps:
a) introducing a first gas stream (11) into the Laval nozzle (5) via the first portion (7);
b) introducing a first particle stream (12), at least comprising a binding material (13) for the active material (2), into the Laval nozzle (5) via the third portion (10);
c) mixing the first gas stream (11) and the first particle stream (12) and accelerating the first particle stream (12) by means of the first gas stream (11) flowing at a supersonic speed in the third portion (10);
d) subjecting the support material (1) to the first particle stream (12) to form a layer (14, 23) of a coating (15);
**characterized in that** the active material (2) is introduced into the Laval nozzle (5) as a second particle stream (20) via the first portion (7) and the binding material (13) is introduced into said Laval nozzle as the first particle stream (12) via the third portion (10).

2. Method according to Claim 1, wherein the first gas stream (11) comprises at least one of the following: nitrogen, helium, a mixture of nitrogen and helium, or air.

3. Method according to either of the preceding claims, wherein the material of the first particle stream (12) is in powder form and solvent-free and comprises at least one of the following: conductive carbon black, NMC, graphite, CNT, SBR, CMC, PVDF and porous graphite.

4. Method according to one of the preceding claims, wherein the first particle stream (12) is mixed with a second gas stream (16) before being introduced into the third portion (10).

5. Method according to one of the preceding claims, wherein the first particle stream (12) is introduced into the third portion (10) via a plurality of inlet openings (17).

6. Method according to Claim 5, wherein at least two inlet openings (17) are arranged at different distances (18) from one another from the smallest throughflow cross section (9).

7. Method according to either of preceding Claims 5 and 6, wherein at least two inlet openings (17) are arranged offset from one another along a circumferential direction (19) running transversely to the direction of throughflow (6).

8. Method according to one of the preceding claims, wherein a third gas stream (21) is introduced into the Laval nozzle (5) via the third portion (10).

9. Method according to one of the preceding claims, wherein steps a) to d) are carried out several times one after the other for the support material (1), so that the active material (2) is applied in a plurality of layers (14, 23).

10. Method according to Claim 9, wherein a first layer (14) of the coating (15) has a first thickness (22) and a second layer (23), applied after the first layer (14), has a second thickness (24), wherein the second thickness (24) is greater than the first thickness (22).

11. Method according to either of preceding Claims 9 and 10, wherein a first layer (14) of the coating (15) has a first density and a second layer (23), applied after the first layer (14), has a second density, wherein the second density is lower than the first density.

12. Method according to one of the preceding claims, wherein, after step d), a density of the layer (14, 23) is increased by at most 10%.

## Revendications

1. Procédé pour revêtir un matériau support (1) avec un matériau actif (2) pour fabriquer une feuille d'électrode (3) d'une cellule de batterie (4) avec une tuyère de Laval (5), la tuyère de Laval (5) présentant au moins une première portion convergente (7), une deuxième portion (8) ayant une section transversale d'écoulement (9) la plus petite et une troisième portion divergente (10) agencées l'une après l'autre le long d'une direction d'écoulement (6) ; le procédé comprenant au moins les étapes suivantes :
a) introduire un premier flux de gaz (11) dans la tuyère de Laval (5) par la première portion (7) ;
b) introduire dans la tuyère de Laval (5), via la troisième portion (10), un premier flux de particules (12) comprenant au moins un matériau liant (13) pour le matériau actif (2) ;
c) mélanger le premier flux de gaz (11) et le premier flux de particules (12) et accélérer le premier flux de particules (12) par le premier flux de gaz (11) s'écoulant à une vitesse supersonique dans la troisième portion (10) ;
d) appliquer le premier flux de particules (12) sur le matériau support (1) pour former une couche (14, 23) d'un revêtement (15) ;
**caractérisé en ce que** le matériau actif (2) est introduit via la première portion (7) dans la tuyère de Laval (5) sous la forme d'un deuxième flux de particules (20) et le matériau liant (13) est introduit via la troisième portion (10) sous la forme du premier flux de particules (12).

2. Procédé selon la revendication 1, dans lequel le premier flux de gaz (11) comprend au moins un parmi ce qui suit : azote, hélium, mélange d'azote et d'hélium, ou air.

3. Procédé selon l'une des revendications précédentes, dans lequel le matériau du premier flux de particules (12) est pulvérulent et exempt de solvant, et comprend au moins un parmi ce qui suit : noir de carbone conducteur, NMC, graphite, CNT, SBR, CMC, PVDF et graphite poreux.

4. Procédé selon l'une des revendications précédentes, dans lequel le premier flux de particules (12) est mélangé à un deuxième flux de gaz (16) avant d'être introduit dans la troisième portion (10).

5. Procédé selon l'une des revendications précédentes, dans lequel le premier flux de particules (12) est introduit dans la troisième portion (10) via une pluralité d'ouvertures d'entrée (17).

6. Procédé selon la revendication 5, dans lequel au moins deux ouvertures d'entrée (17) sont agencées à des distances (18) différentes l'une de l'autre par rapport à la portion d'écoulement de section transversale (9) la plus petite.

7. Procédé selon l'une des revendications 5 et 6 précédentes, dans lequel au moins deux ouvertures d'entrée (17) sont agencées de manière décalée l'une par rapport à l'autre le long d'une direction circonférentielle (19) s'étendant transversalement à la direction d'écoulement (6).

8. Procédé selon l'une des revendications précédentes, dans lequel un troisième flux de gaz (21) est introduit dans la tuyère de Laval (5) par l'intermédiaire de la troisième portion (10).

9. Procédé selon l'une des revendications précédentes, dans lequel les étapes a) à d) sont mises en œuvre plusieurs fois de suite pour le matériau support (1), de sorte que le matériau actif (2) est appliqué en une pluralité de couches (14, 23).

10. Procédé selon la revendication 9, dans lequel une première couche (14) du revêtement (15) présente une première épaisseur (22) et une deuxième couche (23) appliquée ensuite sur la première couche (14) présente une deuxième épaisseur (24), la deuxième épaisseur (24) étant supérieure à la première épaisseur (22).

11. Procédé selon l'une des revendications 9 et 10 précédentes, dans lequel une première couche (14) du revêtement (15) présente une première densité et une deuxième couche (23) appliquée ensuite sur la première couche (14) présente une deuxième densité, la deuxième densité étant inférieure à la première densité.

12. Procédé selon l'une des revendications précédentes, dans lequel, après l'étape d), la densité de la couche (14, 23) est augmentée d'au plus 10 %.
